# EUROPÄISCHE PATENTSCHRIFT

(11) **EP 1 647 731 B1**
(45) Veröffentlichungstag und Bekanntmachung des Hinweises auf die Patenterteilung: **13.03.2013**
(21) Anmeldenummer: 05018647.7
(22) Anmeldetag: 27.08.2005
(51) Int. Cl.: F16D 23/14

(54) **Ausrückvorrichtung für eine Schalttrennkupplung an Kraftfahrzeugen**
Clutch release mechanism for a motor vehicle gear shift clutch
Mécanisme de butée d'embrayage de séparation de véhicule automobile

(30) Priorität: 18.10.2004 DE 102004050871; 24.12.2004 DE 102004062586
(43) Veröffentlichungstag der Anmeldung: 19.04.2006
(73) Patentinhaber: Schaeffler Technologies AG & Co. KG, 91074 Herzogenaurach (DE)
(72) Erfinder: Winkelmann, Ludwig, 91056 Erlangen (DE); Dittmer, Steffen, Dipl.-Ing., 91086 Aurachtal (DE); Klöpfer, Bernhard, Dipl.-Ing., 91438 Bad Windsheim (DE)

(56) Entgegenhaltungen:
- DE-A1- 4 302 780
- DE-A1- 10 114 846
- DE-A1- 10 124 663
- DE-A1- 10 125 691
- DE-A1- 10 246 937
- DE-A1- 19 753 694
- FR-A1- 2 508 997

## Beschreibung

### Gebiet-der Erfindung

Die Erfindung bezieht sich auf eine Ausrückvorrichtung für eine Schalttrennkupplung an Kraftfahrzeugen, mit einem sich an einem Gehäuse abstützenden selbsteinstellenden Ausrücklager in Form eines als Schrägschulterlager ausgebildeten Wälzlagers, weiches einen drehstarr angeordneten äußeren Lagerring und einen umlaufenden inneren Lagerring sowie zwischen desselben geführte Wälzkörper aufweist.

### Hintergrund der Erfindung

Derartige Ausrückvorrichtungen sind beispielsweise aus der DE 101 14 846 A1 und der DE 101 24 663 A1 bekannt, wobei sich an der von den Wälzkörpern abgewandten Seite des inneren Lagerrings ein Einstellring abstützt, an dessen radial ausgerichteten Ringflansch stirnseitig ein der Schalttrennkupplung zugeordnetes Federelement, vorzugsweise in Form einer Tellerfeder mittels Federzungen, kraftschlüssig anliegt. Ferner ist in einem Abstützbereich des Einstellringes am inneren Lagerring in Form von komplementären Kugelkalottensegmenten derselben zur Erzielung einer selbsttätigen Ausrichtung bzw. Ver schwenkung des Ausrücklagers gegenüber dem Einstellring ein Gleitelement eingesetzt, welches an dem Einstellring lagefixiert ist.

*Das in* DE 101 24 663 A1 *beschriebene Gleitelement ist aus einem thermoplastischen Kunststoff hergestellt, der eine hohe Temperatur- und Wechselbeanspruchungsfähigkeit und gute Rissbeständigkeit aufweist. Das Gleitelement ist vorzugsweise durch Spritzgießen hergestellt und beispielsweise ein auf den Einstellring gespritzter armierter Belag, dessen Armierung durch den Einstellring gebildet ist. Durch diese Anordnung wird besonders wirkungsvoll die Selbsteinstellbarkeit des Ausrücklagers verbessert sowie dessen Geräuschverhalten optimiert. Dieses Betriebsverhalten tritt insbesondere deswegen ein, weil die Reibung und demgemäss der Verschleiß zwischen den miteinander korrespondierenden Bauteilen, vorliegend zwischen dem Gleitelement und dem Innen- bzw. dem Einstellring sowie zwischen dem Einstellring In der Praxis ist im Ergebnis eine Erhöhung des Bedienungs- und Fahrkomforts durch reduzierte Pedalbetätigungskräfte zu verzeichnen, wodurch wiederum der Wirkungsgrad der Ausrückvorrichtung an sich erhöht wird. Weiterhin verhindert dies ein nachteiliges Kupplungsrupfen.*

Des Weiteren ist aus der DE 101 25 691 A1 eine Ausrückvorrichtung der gattungsgemäßen Art bekannt, wobei der innere umlaufende Lagerring einen Ringflansch aufweist, an dem eine Anlaufscheibe lagefixiert ist und an welcher sich das Federelement der Schalttrennkupplung abstützt. *Die Anlaufscheibe ist aus einem Werkstoff hergestellt, der neben verbesserten Reibeigenschaften auch gleichzeitig geringere Verschleißanfälligkeit aufweist Aufgrund des verringerten Verschleißes am Federelement bzw. an dessen Federzungen ist ferner eine Reduzierung des Reibrostes zu verzeichnen, welches dazu führt, dass die Befettung der Vielkeitverzehnung an der Kupplungsnabe im Betrieb weniger entölt wird, und es nicht zum Verkleben der Kupplungsnabe auf dem Vierkeilprofi! der Getriebeeingangswelle kommt. Beim Verkleben der Kupptungsnabe auf dem Vielkeilprofil wird bekanntermaßen die Reibbelagscheibe in nachteiliger Weise nicht ausreichend von der Druckscheibe getrennt und demgemäss noch angetrieben, welches bei Gangwechsel zu verstärkter Beanspruchung der Synchronisation führt. Der Gangwechsel kann dabei stark erschwert werden, welches üblicherweise zu unangenehmen Einbußen des Fahrkomforts führt, und durch die Nutzung der Anlaufscheibe nunmehr vermieden ist. Darüber hinaus weist eine derartige Anlaufscheibe dämpfende Wirkung auf. Die Anlaufscheibe ist formschlüssig mit dem Ringflansch verbunden oder als Belag unmittelbar auf den Ringflansch des Lagerrings aufgespritzt.*

### Aufgabe der Erfindung

Der Erfindung liegt die Aufgabe zugrunde, eine Ausrückvorrichtung der gattungsgemäßen Art *zu schaffen, die sich einfach und kostengünstig herstellen lässt*

### Zusammenfassung der Erfindung

Die gestellte Aufgabe wird gemäß den Merkmalen des Anspruchs 1 gelöst.

Das Gleitelement und die Beschichtung sind aus Kunststoff in einem Arbeitsgang durch das genannte Spritzgießverfahren an den Einstellring angeformt, woraus Kostenvorteile hinsichtlich der Fertigung und der Logistik resultieren, da nunmehr keine separaten Kunststoffteile hergestellt, gelagert und zur Montage bereitgestellt werden müssen. Aufwendige Fixierungen und Befestigungen am Einstellring entfallen somit ebenfalls.

Als vorteilhaft hat sich ferner erwiesen, das Gleitelement und die Beschichtung untereinander materialverbunden einteilig auszubilden. Demnach geht Material des Gleitelementes in die Beschichtung über, wodurch Kostenersparnisse dahingehend zu verzeichnen sind, dass das Spritzwerkzeug einfacher gestaltet werden kann und der Fließvorgang des plastischen Kunststoffmaterials beim Umspritzen erleichtert ist.

Bevorzugte Weiterbildungen oder Ausgestaltungen der Erfindung sind in den Unteransprüchen definiert.

Danach das Gleitelement *und die Beschichtung des Ringflansches* vorzugsweise aus einem hochfesten und verschleißfesten Kunststoff gebildet.

Was die Beschichtung des Ringflansches des Einstellringes anbelangt, bietet sich eine Anlaufscheibe aus einem hochfesten und verschleißfesten Kunststoff, einer Keramik oder einem Hartmetall an. Ferner kann die Beschichtung des Ringflansches des Einstellringes auch durch eine nach einem Spritzgießverfahren an den Ringflansch angeformte Anlaufscheibe aus Kunststoff gebildet sein.

Um insbesondere ein Durchrutschen der Tellerfederzungen in den ersten Betriebsstunden und daraus resultierende Einlaufgeräusche zu verhindern bzw. zu minimieren sowie eine Verbesserung der Selbstzentrierung des Ausrücklagers zu erreichen, kann die geräusch- und verschleißmindernde Beschichtung aus Kunststoff zumindest im Bereich der Kontaktzone mit dem Federelement beziehungsweise den Tellertederzungen eine eingeformte Mikrostruktur aufweisen, welche unter Belastung durch das Federelement zumindest an deren Oberfläche plastifizierbar ist.

Als Kunststoffe sind vorzugsweise thermoplastische Kunststoffe auf der Basis eines hochwärmebeständigen Polyamides oder andere hochwärmebeständige thermoplastische Kunststoffe, wie Polyaryletherketone (PAEK), vorgesehen.

Aus dem Bereich der Polyamide haben sich dabei Polyamid 46 (PA 46) oder teilaromatische Polyamide, wie Polyphthalamid (PPA) oder Poly-Hexamethylen-Therephthalamid (PA6T) beziehungsweise Copolymere desselben mit Poly-Hexamethylen-Isophthalamid (PA6T/6I) und/oder Poly-Hexamethylen-Adipinamid (PA6t/66, PA6T/6I/66) oder Poly-Mothylpentamethylen-Terephthalamid (PA6T/MPMDT) mit reibungs- und verschleißmindernden sowie festigkeitssteigernden Zuschlagstoffen, bewährt.

Insoweit sind als Zuschlagstoffe Kohlenstofffaserm und/oder Aramidfasern mit einem Gewichtsanteil von 1 bis 40%, vorzugsweise Kohlenstofffasern mit einem Gewichtsanteil von 20 bis 30%, Aramidfasern mit einem Gewichtsanteil von 1 bis 15%, sowie Festschmierstoffe, wie Molybdändisulfid, mit einem Gewichtsanteil von 1 bis 5%, zusammen mit oder alternativ Graphit in einem Gewichtsanteil von 1 bis 10%, zusammen mit einem oder alternativ ein Reibungsminderer, wie Polytetrafluorethylen (PTFE), in einem Gewichtsanteil von 1 bis 30%, vorzugsweise einem PTFE-Anteil von 5 bis 15 Gewichtsprozent, zusammen mit oder alternativ Polyphenylensulfon (PPSO2, Ceramer^{®}) in einem Gewichtsanteil von 1 bis 30%, vorzugsweise 1 bis 15 Gewichtsprozent vorgesehen.

FOr thermisch hoch beanspruchte Anwendungsfälle erweisen sich Werkstoffe aus Duroplasten als nützlich, wobei vorzugsweise eine duroplastische Formmasse mit reibungs- und verschteißmindemden Zuschlagstoffen vorzusehen ist. Ein solcher Werkstoff kann vorzugsweise gebildet sein aus einer Phenol-Formaldehyd-Harzmasse (PF) mit Glas- und/oder Kohlenstofffasern und/oder Graphit und/oder Polyphensulfon (PPSO2, Ceramer®). Es sind aber auch Keramik-Werkstoffe mit geeigneten reibungs- und verschleißmindernden Zuschlagstoffen sinnvoll.

Weiterhin wird vorgeschlagen, dass der Einstellring Aussparungen, Anprägungen, Durchbrüche und/oder Nuten zur Fixierung des Gleitelementes und/oder der Beschichtung der im Spritzgießverfahren angeformte Teile aufweist. Vorzugsweise sind dabei die Nuten radial ausgerichtet.

Wie die Erfindung schließlich noch vorsieht, das Gleitelement die Beschichtung des Ringflansches des Einstellringes durch eine Hartstoffbeschichtung gebildet.

Für die genannte Hartstoffbeschichtung bietet sich danach eine an sich bekannte DLC-Beschichtung (DLC=diamond-like-carbon) an, die ihrerseits beispielsweise mittels eines Plasma-Oberflächenbeschichtungsverfahrens auf die verschleißgefährdete Oberfläche des Einstellringes aufbringbar ist.

Weiterhin eignet sich eine Hartstoffbeschichtung, welche Kohlenwasserstoffschichten mit Anteilen an Wolfram umfasst, beispielsweise mit der Bezeichnung W-C:H.

Vorteilhaft kann als Hartstoffbeschichtung Titan-Niobnitrid oder auch Titan-Nioboxynitrid eingesetzt werden. Eine weitere nutzbare Hartstoffbeschichtung besteht aus tetreadrischem Kohlenstoff ohne Wasserstoff.

Außerdem sind Chromnitrid-Schichten als Hartstoffbeschichtung einsetzbar, in die Nanodispersionen aus Chromkohlenstoff CrC eingelagert sind. Diese Hartstoffbeschichtungen zeichnen sich durch eine besonders große Härte und hohe Verschleißfestigkeit aus. Zudem besitzt eine solche chromnitrideinschließende Hartstoffbeschichtung eine hohe Haftfähigkeit an demjenigen Bauteil, welches gezielt beschichtet werden soll.

Die Hartstoffbeschichtung kann weiterhin als eine Mehrlagenschicht gestaltet werden. Dazu eignet sich insbesondere der o.g. mit Wolfram versehene Werkstoff W-C:H plus wenigstens eine Beschichtung aus a-C:H. Diese Multilagen-Schicht ist vorteilhaft reibungsarm und gleichzeitig verschleißfest.

Als Hartstoffbeschichtung, mit der erfindungsgemäß das gesamte Ausrücklager bzw. gezielt Kontaktzonen beschichtet werden, eignet sich außerdem eine sogenannte Supernitrid-Schicht.

Um eine geringst möglich Reibung an der sphärischen Kontaktzone zwischen dem Einstellring und dem umlaufenden Lagerring zu erzielen, wird vorgeschlagen, eine hinsichtlich der Reibungsoptimierung modifizierte Hartstoffbeschichtung zu nutzen, die bevorzugt in einem Arbeitsgang aufgetragen wird.

Die Hartstoffbeschichtung ist vorzugsweise auf zumindest einer Kontaktfläche und/oder auf zumindest einer Lauffläche der Ausrückvorrichtung in einer Dicke von vorzugsweise weniger oder gleich 0,015 mm aufgetragen, maximal bis 0,1 mm.

Die Auftragung der Hartstoffbeschichtung kann mittels einer Plasma-Oberflächenbeschichtung oder mittels eines Laserstrahls, bevorzug gepulst betrieben, auf die einem Verschleiß ausgesetzte Kontaktzone eines Bauteils des Ausrücklagers erfolgen.

### Kurze Beschreibung der Zeichnungen

Die Erfindung wird im folgenden anhand der beiliegenden Zeichnung an einigen Ausführungsformen näher erläutert. Darin zeigt
- Fig. 1: ein mechanisches Kupplungsbetätigungssystem mit Kupplungshebel und Ausrückvorrichtung in einer Seitenansicht,
- Fig. 2: die Ausrückvorrichtung nach Fig. 1 in einer Einzelteildarstellung,
- Fig. 3: eine Schnittdarstellung einer Ausrückvorrichtung, die nicht Gegenstand der Erfindung ist, wobei Gleitelement und Beschichtung als Anbauteile ausgebildet und mit dem Einstellring verbunden sind - Schnitt "I-I" nach Fig. 2 (Variante 1),

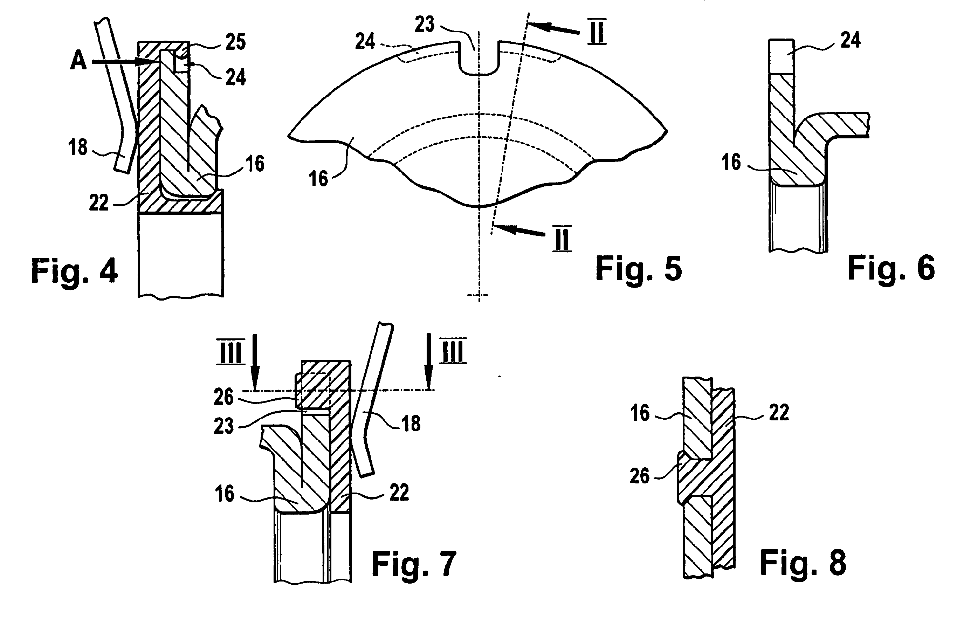

- Fig. 4: die Einzelheit "Z" gemäß Fig. 3 (Variante 2),
- Fig. 5: die Ansicht "A" gemäß Fig. 4,
- Fig. 6: den Schnitt "II-II" gemäß Fig. 5,
- Fig. 7: die Einzelheit "Z" gemäß Fig. 3 (Variante 3), hier um eine vertikale Achse gedreht gezeigt,
- Fig. 8: den Schnitt "III-III" gemäß Fig. 7,
- Fig. 9: einen Teilschnitt einer bevorzugten Ausführungsform der Ausrückvorrichtung, wobei Gleitelement und Beschichtung mittels Spritzgießen am Einstellring festgelegt sind,
- Fig. 10: die Ansicht "B" gemäß Fig. 9,
- Fig. 11: eine Weiterbildung der Ausrückvorrichtung gemäß Fig. 9,
- Fig. 12: eine Ausrückvorrichtung, die nicht Gegenstand der Erfindung ist, bei der ein als separates Bauteil ausgebildetes Gleitelement auf dem Einstellring befestigt ist,
- Fig. 13: eine Ausrückvorrichtung, bei der der Einstellring mit einem Gleitelement verbunden und mittels diesem am Gehäuse der Ausrückvorrichtung gehalten ist,
- Fig. 14: eine erste Variante der Ausrückvorrichtung gemäß Fig. 13,
- Fig. 15: eine zweite Variante der Ausrückvorrichtung gemäß Fig. 13,
- Fig. 16: eine Ausrückvorrichtung, bei der ein separates Gleitelement mit dem inneren Lagerring verbunden ist und die nicht Gegenstand der Erfindung ist, und
- Fig. 17: eine Ausrückvorrichtung, bei der auf dem Einstellring und/oder dem inneren Lagerring eine Verschleißschicht aus einer Hartstoffbeschichtung aufgetragen bzw. ausgebildet ist.

### Detaillierte Beschreibung der Zeichnungen

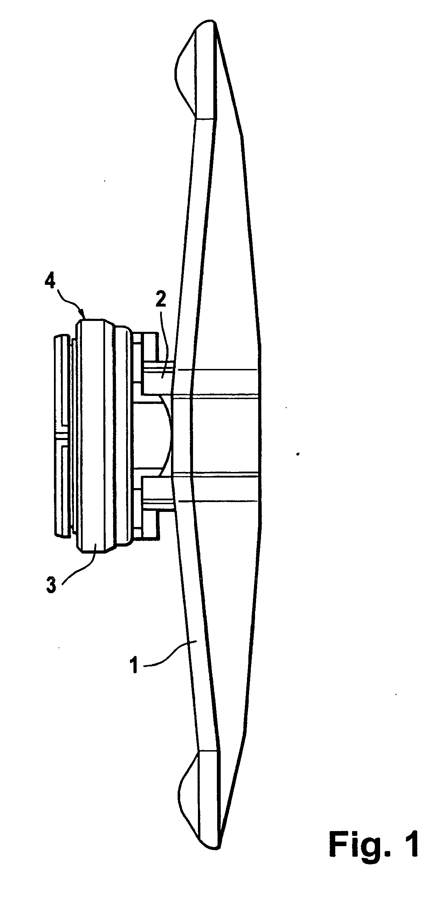

Fig. 1 zeigt ein an sich bekanntes mechanisches Kupplungsbetätigungssystem für eine Schalttrennkupplung an Kraftfahrzeugen mit einem Kupplungshebel 1, dessen Betätigungsglied 2 an einem axial verschiebbaren Gehäuse 3 einer Ausrückvorrichtung 4 angreift und herkömmlich über einen nicht näher gezeigten Seilzug oder einen geeigneten Aktuator mit dem Kupplungspedal in der Fahrgastzelle des Kraftfahrzeugs wirkverbunden ist.

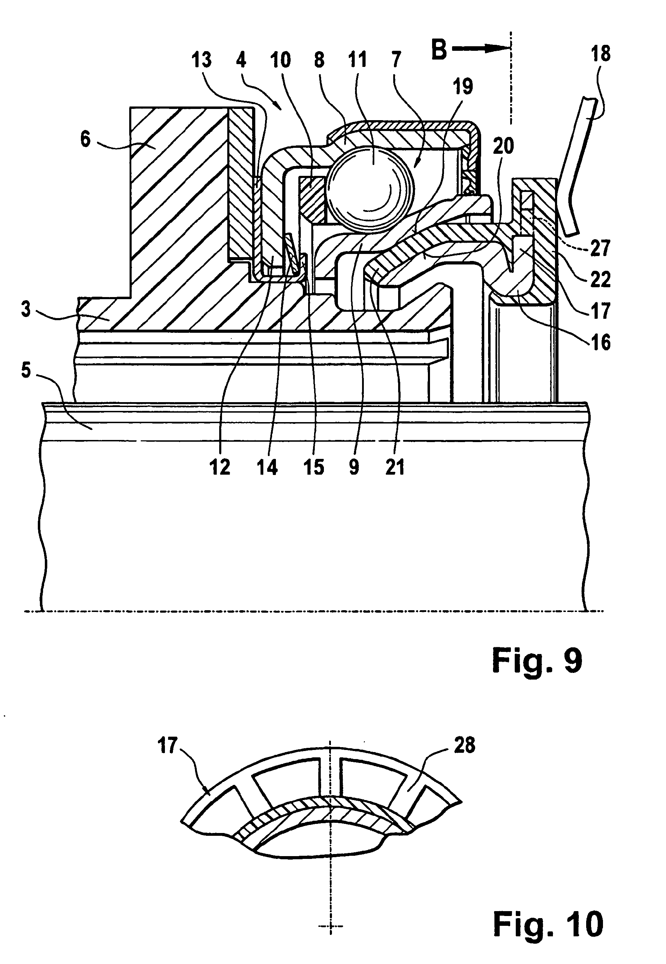

Im eingebauten Zustand wird das Gehäuse 3 der Ausrückvorrichtung 4 auf einer nicht näher dargestellten Führungsholse geführte, welche eine Antriebswelle 5 (Fig. 9 bis 11) umschließt, die über die Kupplung die Brennkraftmaschine des Kraftfahrzeugs mit einem Schaltgetriebe verbindet.

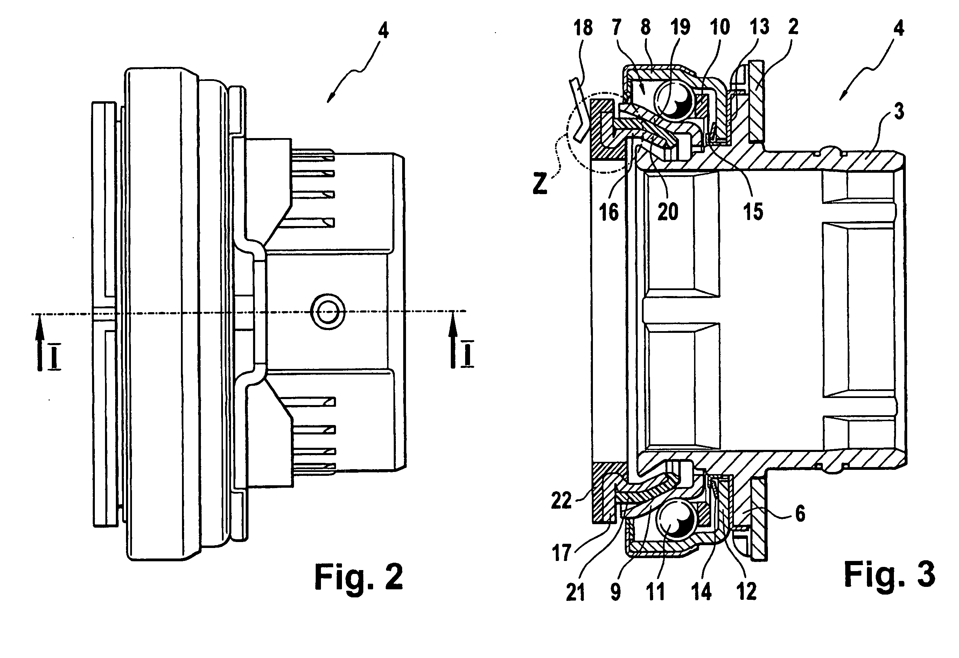

Die Ausrückvorrichtung 4 umfasst gemäß den Figuren 2 und 3 ein sich an einem radial abgestellten Flansch 6 des Gehäuses 3 abstützendes selbsteinstellendes Ausrücklager 7 in Form eines als Schrägschulterlager ausgebildeten Wälzlagers. Das Ausrücklager 7 ist seinerseits durch einen drehstarren äußeren Lagerring 8 und einen umlaufenden inneren Lagerring 9 sowie zwischen denselben in einem sogenannten Schnappkäfig 10 gehaltenen und geführten Wälzkörper 11 gebildet.

Wie auch Fig. 9 zeigt, ist der drehstarr ausgebildete äußere Lagerring 8 mit einem radial nach innen gerichteten Ringboden 12 unter Zwischenschaltung eines ringförmigen Haltebleches 13 am Flansch 6 des Gehäuses 3 abgestützt, wobei zur Erzielung einer krafttschlüssigen Anlage des Ringbodens 12 eine Tellerfeder 14 vorgesehen ist, die zwischen einem Bord 15 des ringförmigen Haltebleches 13 und dem Ringboden 12 eingesetzt ist. Vorliegend ist das Halteblech 13 im Bereich des Flansches 6 abgewinkelt ausgebildet, kann jedoch zur Verbesserung des Festsitzes desselben am Flansch 6 auch um diesen herum geführt beziehungsweise gebördelt ausgebildet sein (nicht näher dargestellt).

An der den Wälzkörpern 11 abgewandten Seite des umlaufenden inneren Lagerringes 9 stützt sich ein Einstellring 16 ab, an dessen Ringflansch 17 stirnseitig ein der Schalttrennkupplung zugeordnetes und beispielsweise als Tellerfeder mit Federzungen ausgebildetes Federelement 18 kraftschlüssig anliegt

Zur Erzielung einer selbsttätigen Ausrichtung des Ausrücklagers 7 zum Einstellring 16 beziehungsweise zur schwenkbaren Anordnung sowie zur Vermeidung einer Stahl-Stahl-Paarung ist zwischen dem inneren Lagerring 9 und dem Einstellring 16, welche überwiegend aus Stahlblech durch Tiefziehen und/oder Stanzen gefertigten sind, in einem Abstützbereich des Einstellringes 16 am inneren Lagerring 9 in Form von komplementären Kugelkalottensegmenten 19, 20 derselben ein Gleitelement 21 angeordnet

Vorzugsweise besteht das Gleitelement 21 aus einem hochfesten und verschleißfesten Kunststoff, wobei thermoplastische Kunststoffe auf der Basis eines hochwärmebeständigen Polyamides oder andere hochwärmebeständige thermoplastische Kunststoffe, wie beispielsweise Polyaryletherketone (PAEK) Verwendung finden können.

Was die etwaig verwendeten Polyamide anbelangt, haben sich dabei Polyamid 46 (PA 46) oder teilaromatische Polyamide, wie Polyphthalamid (PPA) oder Poly-Hexamethylen-Therephthalamid (PA6T) beziehungsweise Copolymere desselben mit Poly-Hexamethylen-Isophthalamid (PA6T/6I) und/oder Poly-Hexamethylen-Adipinamid (PA6t/66, PA6T/6I/66) oder Poly-Methylpentamethylen-Terephtha-lamid (PA6T/MPMDT) mit reibungs- und verschleißmlndemden sowie festigkeitssteigernden Zuschlagstoffen, bewährt.

Als Zuschlagstoffe bieten sich in Kenntnis des Kemgedankens der Erfindung insbesondere Kohlenstofffasern und/oder Aramidfasern in einem Gewichtsanteil von 1 bis 40%, vorzugsweise Kohlenstofffasern mit einem Gewichtsanteil von 20 bis 30%, Aramidfasern mit einem Gewichtsanteil von 1 bis 15%, sowie Festschmierstoffe, wie Molybdändisulfid, mit einem Gewichtsanteil von 1 bis 5%, zusammen mit oder alternativ Graphit in einem Gewichtsanteil von 1 bis 10%, zusammen mit einem oder alternativ ein Reibungsminderer, wie Polytetrafluorethylen (PTFE), in einem Gewichtsanteil von 1 bis 30%, vorzugsweise einem PTFE-Anteü von 5 bis 15 Gewichtsprozent, zusammen mit oder alternativ Polyphenylensulfon (PPSO2, Ceramer^{®}) in einem Gewichtsanteil von 1 bis 30%, vorzugsweise 1 bis 15 Gewichtsprozent an.

Das Gleitelement 21 ist nach einem an sich bekannten Spritzgießverfahren an demselben angespritzt bzw. angeformt.

In vorteilhafter Kombination mit vorstehend beschriebenen Merkmalen ist nunmehr dem radial ausgerichteten Ringflansch 17 des Einstellringes 16 eine geräusch- und verschleißmindernde Beschichtung 22 zugeordnet, an welcher sich das mit der Schalttrennkupplung verbundene Federelement 18 abstützt (Fig. 3 und Fig. 9).

Auch hier wird eine herkömmliche Stahl-Stahl-Paarung dadurch vermieden, dass die Beschichtung 22 durch eine nach einem an sich bekannten Spritzgießverfahren an den Ringflansch 17 angeformte Anlaufscheibe aus Kunststoff gebildet ist. Auch hier kommen die vorstehend genannten thermoplastischen Kunststoffe auf der Basis eines hochwärmebeständigen Polyamides oder andere hochwärmebeständige thermoplastische Kunststoffe, wie beispielsweise Polyaryletherketone (PAEK) zur Anwendung. Hinsichtlich der Vorteile einer solchen Beschichtung 22 wird auf die obigen Ausführungen verwiesen. Für thermisch hoch beanspruchte Anwendungen kommen insbesondere Duroplaste oder Keramikwerkstoffe, modifiziert mit Gleitverbesserungsmitteln zum Einsatz.

Des Weiteren wurde festgestellt, dass eine zumindest im Bereich der Kontaktzone der Beschichtung 22 mit dem Federelement 18 in dieselbe eingeformte Mikrostruktur sich gerade in den ersten Betriebsstunden bzw. in der Einlaufphase der Schalttrennkupplung besonders vorteilhaft auswirkt, indem ein Durchrutschen des Federelementes 18 beziehungsweise der Tellerfeder bzw. deren Federzungen durch diese Mikrostruktur verhindert und diese unter der Belastung durch die Tellerfederzungen plastifiziert wird. In der Folge werden Einlaufgeräusche verhindern, zumindest jedoch deutlich minimiert, und eine Verbesserung der Selbstzentrierung des Ausrücklagers 7 erreicht.

Bezüglich der Fixierung einer separat hergestellten Beschichtung 22 in Form einer Anlaufscheibe am Einstellring 16 werden bevorzugt stoffschlüssige Befestigungsmaßnahmen empfohlen.

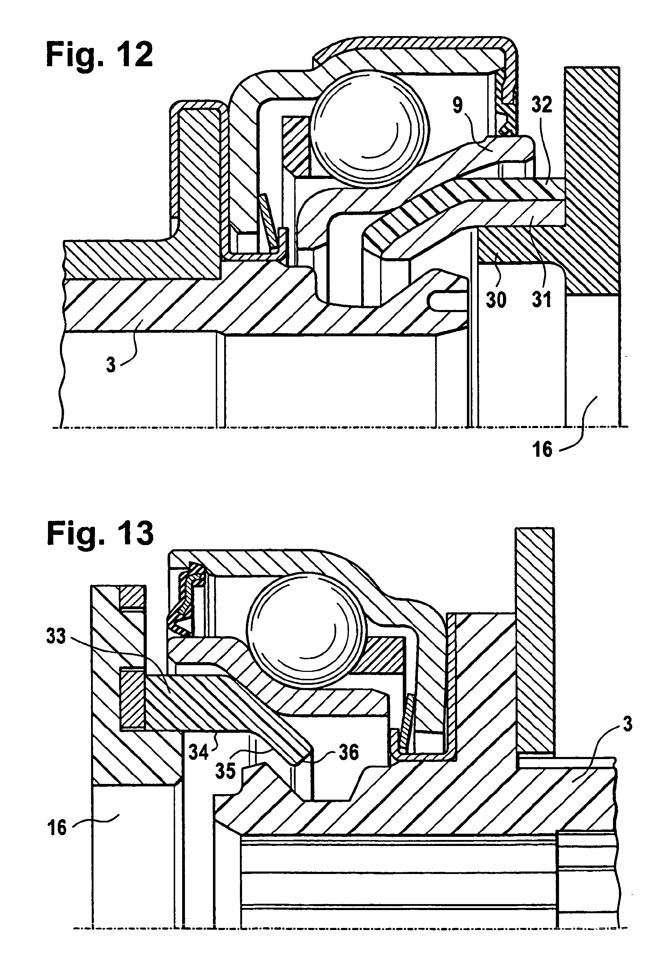

In diesen Figuren zeigt Fig. 12 eine Ausrückvorrichtung, die nicht Gegenstand der Erfindung ist, der beschriebenen Art, bei der auf einen hohlzylindrischen Abschnitt 30 des Anlaufringes 16 ein teilweise sphärisch geformter Haltering 31 aufgesteckt ist, der auf seiner Außenseite ein aufgeschobenes, separat hergestelltes Gleitelement 32 trägt, welches mit der wälzkörperabgewandten Seite des inneren Lagerringes 9 in Gleitkontakt steht. Dabei sind der hohlzylindrische Abschnitt 30 und der Haltering 31 sowie das Gleitelement 32 kraft- und/oder formschlüssig miteinander verbunden.

Fig. 13 zeigt eine weitere Ausrückvorrichtung, die nicht Gegenstand der Erfindung ist , bei welcher der Anlaufring 16 mit einem Gleitelement 33 kraft- und/oder formschlüssig verbunden ist. Das Gleitelement 33 weist einen hohlzylindrischen Verbindungsabschnitt 34 auf, ist im davon wegweisenden Bereich 35 sphärisch geformt und verfügt über einen axialen Endabschnitt 36, der im wesentlichen radial nach innen ausgerichteten ist. Dabei dient der Verbindungsabschnitt 34 zur Verbindung mit dem Anlaufring 16, der sphärische Abschnitt 35 zur Gleitlagerung am inneren Lagerring 9 und der axiale Endabschnitt 36 zur Verliersicherung des Anlaufringes 16 an dem Gehäuse 3 der Ausrückvorrichtung.

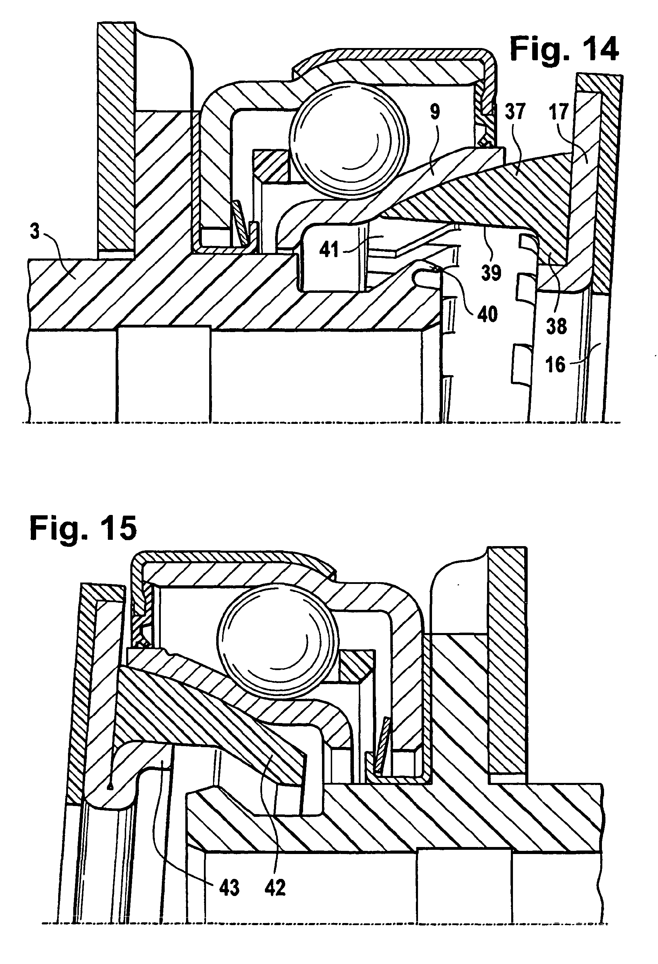

Fig. 14 zeigt eine Ausrückvorrichtung, die nicht Gegenstand der Erfindung ist , bei der ein Gleitelement 37 als Ringbauteil ausgebildet ist, mit einem Verbindungsabschnitt 38 zur Befestigung mit dem Anlaufring 16, und einem Lagerabschnitt 39 zur Gleitlagerung am inneren Lagerring 9. Dieses Gleitelement 37 ist demnach als separates Bauteil ausgebildet und mit dem Ringflansch 17 kraft- und formschlüssig verbunden. Es besteht vorzugsweise aus einem Duroplast-Werkstoff oder einem Keramik-Werkstoff. Die Verliersicherung dieser Kombination von Gleitelement 37 und Anlaufring 16 am Gehäuse 3 der Ausrückvorrichtung erfolgt über Rastnasen 40 und 41, die an den aufeinander zuweisend Stirnseiten von Gehäuse und Anlaufring ausgebildet sind. In Fig. 14 ist eine gekippte Betriebsstellung des Anlaufringes 16 dargestellt, bei der die Verliersicherung durch die unter der Spiegelsymmetrielinie befindlichen Rastnasen 40 und 41 erfolgt.

Einen ähnlichen Aufbau wie die Ausrückvorrichtung gemäß Fig. 13 zeigt die Ausrückvorrichtung gemäß Fig. 15, die nicht Gegenstand der Erfindung ist , jedoch ist bei dieser das Gleitelement 42 auf einem kurzen Flanschabschnitt 43 des Anlaufringes 16 abgestützt.

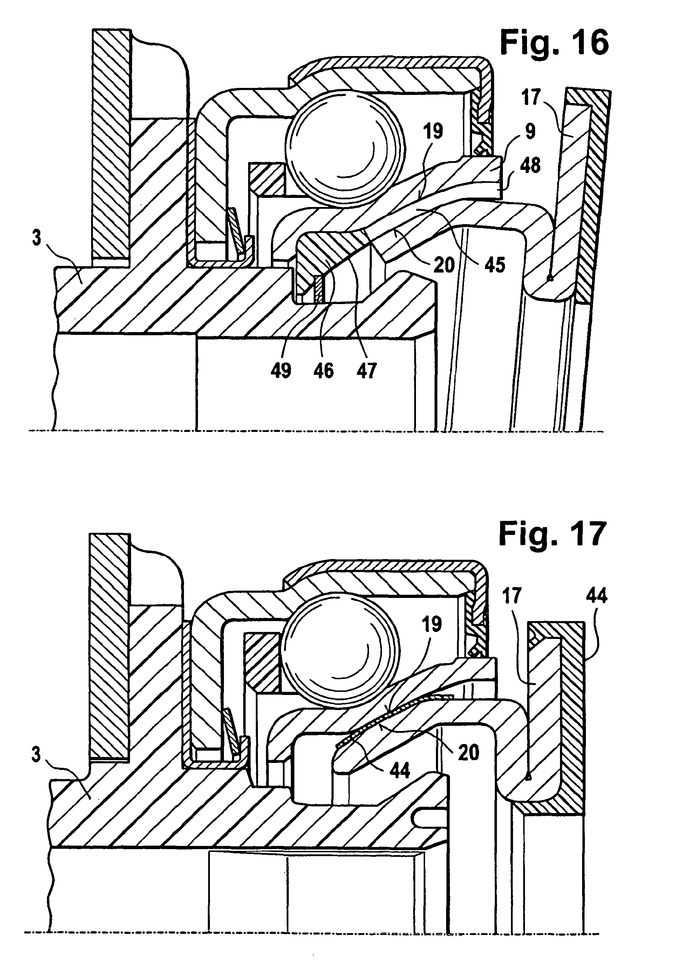

Außerdem zeigt Fig. 16 eine Ausrückvorrichtung, die nicht Gegenstand der Erfindung ist, mit einem separat hergestellten Gleitelement 46, welches zwischen dem inneren Lagerring 9 und dem Gehäuse 3 angeordnet ist. Dieses Gleitelement 46 verfügt über einen gehäusenahen Abschnitt 47 und einen gehäusefemen Abschnitt 48, wobei das Gleitelement 46 mit seinem gehäusenahen Abschnitt 47 zur Axialsicherung durch einen Sicherungsring 49 am Gehäuse gehalten wird, wodurch mittelbar auch der innere Lagerring 9 am Gehäuse 3 fixiert ist.

Der gehäuseferne Abschnitt 48 ist zwischen einem sphärischen Abschnitt (Kugelkalottensegment 20) des Anlaufringes 16 und dem sphärischen Abschnitt (Kugelkalottensegment 19) des inneren Lagerringes 9 angeordnet, und weist axial ausgerichtete Schlitze 45 auf, die von der Betriebstemperatur abhängige Abmessungsänderungen der beiden sphärischen Abschnitte (Kugelkalottensegmente 19 und 20) vorzugsweise elastisch ausgleichen können.

Bei der Ausrückvorrichtung gemäß Fig. 17, die nicht Gegenstand der Erfindung ist, ist eine Hartstoffbeschichtung 44 an der radialen Außenseite des sphärischen Abschnitts (Kugelkalottensegment 20) des Anlaufringes 16 und/oder an der radial nach innen weisenden Seite des inneren Lagerringes 9 (Kugelkalottensegment 19) ausgebildet bzw. aufgetragen. Diese Hartstoffbeschichtung ist hier als eine DLC-Beschichtung ausgebildet, welche aus einem diamantähnlichen Kohlenstoffmaterial besteht oder zumindest diamantähnlich Werkstoffeigenschaften aufweist. Eine solche Beschichtung 44 kann auch an derjenigen Stirnseite des Anlaufringes 16 aufgebracht sein, welche zur Anlage der Federzungen der Tellerfeder dient.

Wie bereits oben ausgeführt, können ferner das Gleitelement 21 und die Beschichtung 22 aus Kunststoff nach einem Spritzgießverfahren an den Einstellring 16 angeformt sein.

Die Figuren 9 bis 11 zeigen einen solchen Verbund, wobei das Gleitelement 21 und die Beschichtung 22 in einem Arbeitsgang durch das genannte Spritzgießverfahren an den Einstellring 16 angeformt und untereinander materialverbunden, sozusagen einteilig ausgebildet sind, wodurch Kostenersparnisse insbesondere durch vereinfachtes Spritzwerkzeug zu verzeichnen sind.

Insoweit sind zur Erleichterung des Fließvorganges der plastischen Kunststoffmasse beim Umspritzen des Einstellringes 16 im Ringflansch 17 desselben Durchbrüche 27 und zentrumsbezogen, radial ausgerichtete Nuten 28 mit parallel verlaufenden Nutwänden vergesehen.

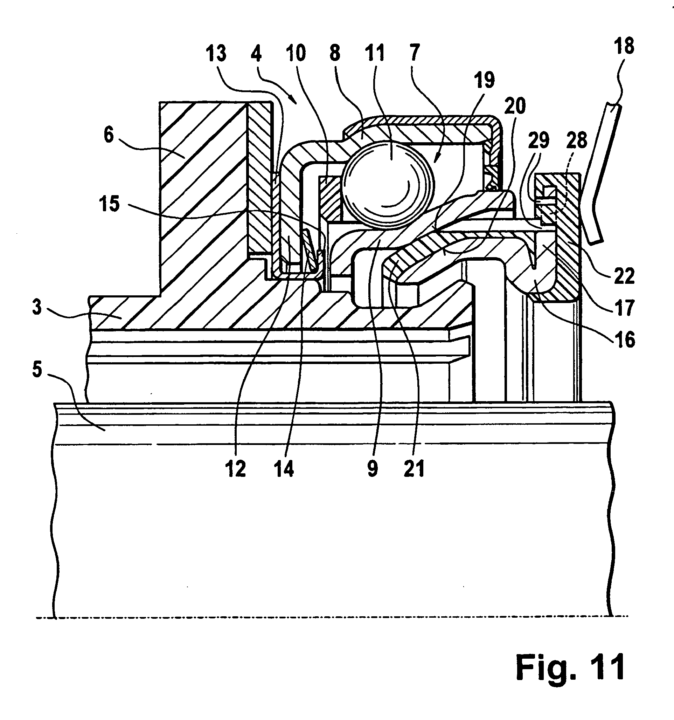

Um Scherkräfte in den Kunststoffteilen zu minimieren, sind des Weiteren im Bereich der Durchbrüche 27 des Ringflansches 17 sogenannte Freistellungen 29 vorhanden, wobei diese bedingt durch die radial ausgerichteten Nuten mit parallelen Nutwänden den Kunststoff sich bei Temperaturänderungen ungehindert ausdehnen lassen (siehe hierzu Fig. 11).

Vorstehende Ausführungsbeispiele stellen im wesentlichen darauf ab, dass das Gleitelement 21 und die Beschichtung 22 aus ein und demselben Werkstoff, nämlich einem geeigneten Kunststoff hergestellt sind. Selbstverständlich kann es auch angezeigt sein und wird durch die Erfindung mit erfasst, dass hierfür andere geeignete und/oder gegebenenfalls unterschiedliche Werkstoffe Verwendung finden.

So kann es beispielsweise vorteilhaft sein, die Beschichtung 22, 44 des Ringflansches 17 in Form der oben genannten separaten Anbauteile aus einer geeigneten Keramik oder einem geeigneten Hartmetall auszubilden, wogegen das jeweilige Gleitelement aus Kunststoff besteht.

Ebenso besteht auch die Möglichkeit, einen herkömmlichen Einstellring 16 aus Stahlblech im Bereich der verschleißanfälligen Oberflächen, vorzugsweise im kalottenartigen Segmentbereich 20 und/oder in dem Bereich des Ringflansches 17, in welchem das Federelement 18 kraftschlüssig angreift, mit der bereits genannten Hartstoffbeschichtung 44, beispielsweise einer DLC-Beschichtung (DLC=diamond-like-carbon) zu versehen (Fig. 17).

Wird der kalottenartige Segmentbereich 20 mit einer solchen Hartstoffbeschichtung versehen, fungiert diese sozusagen als Gleitelement, wobei es dann sicherlich auch angezeigt ist, zumindest auf den korrespondierenden kalottenartigen Segmentbereich 19 des inneren Lagerrings 9 ebenfalls eine solche Hartstoffbeschichtung 44 aufzubringen.

### Bezugszeichen

- 1: Kupplungshebel
- 2: Betätigungsglied
- 3: Gehäuse
- 4: Ausrückvorrichtung
- 5: Antriebswelle
- 6: Flansch (Gehäuse 3)
- 7: Ausrücklager
- 8: äußerer Lagerring
- 9: innerer Lagerring
- 10: Schnappkäfig
- 11: Wälzkörper
- 12: Ringboden (äußerer Lagerring 8)
- 13: Halteblech
- 14: Tellerfeder
- 15: Bord (Halteblech 13)
- 16: Einstellring
- 17: Ringflansch (Einstellring 16)
- 18: Federelement / Tellerfeder
- 19: Kugelkalottensegment (innerer Lagerring 9)
- 20: Kugelkalottensegment (Einstellring 16)
- 21: Gleitelement
- 22: Beschichtung
- 23: Aussparung
- 24: Anprägung
- 25: Rastnase
- 26: Vorsprünge
- 27: Durchbrüche
- 28: Nuten
- 29: Freistellungen
- 30: hohlzylindrischer Abschnitt
- 31: Haltering
- 32: Gleitelement
- 33: Gleitelement
- 34: Verbindungsabschnitt
- 35: sphärischer Bereich
- 36: Endabschnitt
- 37: Gleitelement
- 38: Verbindungsabschnitt
- 39: Lagerabschnitt
- 40: Rastnase
- 41: Rastnase
- 42: Gleitelement
- 43: Flanschabschnitt
- 44: Hartstoffbeschichtung
- 45: Schlitz
- 46: Gleitelement
- 47: gehäusenaher Abschnitt
- 48: gehäusefernen Abschnitt
- 49: Sicherungsring

## Patentansprüche

1. Ausrückvorrichtung (4) für eine Schalttrennkupplung an Kraftfahrzeugen, mit einem sich an einem Gehäuse (3) abstützenden selbsteinstellenden Ausrücklager (7) in Form eines als Schrägschulterlager ausgebildeten Wälzlagers, welches einen drehstarr angeordneten äußeren Lagerring (8) und einen umlaufenden inneren Lagerring (9) sowie zwischen denselben geführte Wälzkörper (11) aufweist, wobei dem inneren Lagerring (9) ein Einstellring (16) zugeordnet ist, und zur schwenkbaren Anordnung des Ausrücklagers (7) in einem Abstützbereich des Einstellringes (16) am inneren Lagerring (9) in Form von komplementären Kugelkalottensegmenten (19, 20) derselben ein Gleitelement (21) eingesetzt ist, **dadurch gekennzeichnet, dass** das Gleitelement (21) aus Kunststoff durch ein Spritzgießverfahren in einem Arbeitsgang zusammen mit einer geräusch- und verschleißmindernden Beschichtung (22) an einem radial ausgerichteten Ringflansch (17) des Einstellringes (16), an welcher sich ein mit der Schalttrennkupplung verbundenes Federelement (18) abstützt, angeformt ist und das Gleitelement und die Beschichtung untereinander materialverbunden einteilig an den Einstellring (16) angeformt sind.

2. Ausrückvorrichtung nach Anspruch 1, **dadurch gekennzeichnet, dass** die Beschichtung (22) des Ringflansches (17) des Einstellringes (16) durch eine mit dem Spritzgießverfahren an den Ringflansch (17) angeformte Anlaufscheibe aus Kunststoff gebildet ist.

3. Ausrückvorrichtung nach Anspruch 2, **dadurch gekennzeichnet, dass** die geräusch- und verschleißmindernde Beschichtung (22) aus Kunststoff ist und zumindest im Bereich der Kontaktzone mit dem Federelement (18) eine eingeformte Mikrostruktur aufweist, welche unter Belastung durch das Federelement (18) plastifizierbar ist.

4. Ausrückvorrichtung nach Anspruch 2 oder 3, **dadurch gekennzeichnet, dass** die geräusch- und verschleißmindernde Beschichtung (22) und der Gleitring (21) aus Kunststoff sind wobei die Kunststoffe vorzugsweise thermoplastische Kunststoffe auf der Basis eines hochwärmebeständigen Polyamides oder andere hochwärmebeständige thermoplastische Kunststoffe, wie Polyaryletherketone (PAEK), sind.

5. Ausrückvorrichtung nach Anspruch 4, **dadurch gekennzeichnet, dass** aus dem Bereich der Polyamide vorzugsweise Polyamid 46 (PA 46) oder teilaromatische Polyamide, wie Polyphthalamid (PPA) oder Poly-Hexamethylen-Therephthalamid (PA6T) beziehungsweise Copolymere desselben mit Poly-Hexamethylen-Isophthalamid (PA6T/6I) und/oder Poly-Hexamethylen-Adipinamid (PA6t/66, PA6T/6I/66) oder Poly-Methylpentamethylen-Terephthalamid (PA6T/MPMDT) mit reibungs- und verschleißmindernden sowie festigkeitssteigernden Zuschlagstoffen, gewählt sind.

6. Ausrückvorrichtung nach Anspruch 5, **dadurch gekennzeichnet, dass** als Zuschlagstoffe Kohlenstofffasern und/oder Aramidfasern in einem Gewichtsanteil von 1 bis 40%, vorzugsweise Kohlenstofffasern mit einem Gewichtsanteil von 20 bis 30%, Aramidfasern mit einem Gewichtsanteil von 1 bis 15%, sowie Festschmierstoffe, wie Molybdändisulfid, mit einem Gewichtsanteil von 1 bis 5%, zusammen mit oder alternativ Graphit in einem Gewichtsanteil von 1 bis 10%, zusammen mit einem oder alternativ ein Reibungsminderer, wie Polytetrafluorethylen (PTFE), in einem Gewichtsanteil von 1 bis 30%, vorzugsweise einem PTFE-Anteil von 5 bis 15 Gewichtsprozent, zusammen mit oder alternativ Polyphenylensulfon (PPSO2, Ceramer®) in einem Gewichtsanteil von 1 bis 30%, vorzugsweise 1 bis 15 Gewichtsprozent gewählt sind.

7. Ausrückvorrichtung nach Anspruch 1, **dadurch gekennzeichnet, dass** das Gleitelement (21) und die Beschichtung (22) des Ringflansches (17) des Einstellringes (16) und/oder die Beschichtung (44) anderer Reibpartner (Kugelkalottensegment 19, 20) durch eine Hartstoffbeschichtung gebildet sind.

8. Ausrückvorrichtung nach Anspruch 7 **dadurch gekennzeichnet, dass** die Hartstoffbeschichtung durch eine DLC-Beschichtung (DLC=diamond-like-carbon) gebildet ist.

9. Ausrückvorrichtung nach Anspruch 7, **dadurch gekennzeichnet, dass** die Hartstoffbeschichtung durch eine Kohlenwasserstoff-Materialschicht mit Wolfram-Anteilen gebildet ist.

10. Ausrückvorrichtung nach Anspruch 7, **dadurch gekennzeichnet, dass** die Hartstoffbeschichtung durch eine Titan-Niobnitrid-Schicht oder eine Titan-Nioboxynitrid-Schicht gebildet ist.

11. Ausrückvorrichtung nach Anspruch 7, **dadurch gekennzeichnet, dass** die Hartstoffbeschichtung aus einem Material gebildet ist, welche aus einem tetredrischem Kohlenstoff ohne Wasserstoff besteht.

12. Ausrückvorrichtung nach Anspruch 7, **dadurch gekennzeichnet, dass** die Hartstoffbeschichtung Chromnitrid-Schichten einschließt, in die Nanodispersionen aus Chromkohlenstoff (CrC) eingelagert sind.

13. Ausrückvorrichtung nach Anspruch 7, **dadurch gekennzeichnet, dass** die Hartstoffbeschichtung eine Mehrlagenschicht bestehend aus W-C:H (Kohlenwasserstoff-Materialschicht mit Wolfram-Anteilen) und wenigstens eine Schicht aus einem Kohlenwasserstoff der Art a-C:H umfasst.

14. Ausrückvorrichtung nach Anspruch 7, **dadurch gekennzeichnet, dass** die Hartstoffbeschichtung als Supernitrid-Schicht ausgebildet ist.

15. Ausrückvorrichtung nach Anspruch 7, **dadurch gekennzeichnet, dass** die Hartstoffbeschichtung auf zumindest einer Kontaktfläche und/oder auf zumindest einer Lauffläche der Ausrückvorrichtung in einer Dicke von weniger oder gleich 0,015 mm aufgetragen ist.

16. Ausrückvorrichtung nach Anspruch 7, **dadurch gekennzeichnet, dass** die Hartstoffbeschichtung mittels einer Plasma-Oberflächenbeschichtung oder mittels eines Laserstrahls, bevorzug gepulst betrieben, auf die einem Verschleiß ausgesetzte Kontaktzone eines Bauteils des Ausrücklagers aufgetragen ist.

## Claims

1. Clutch operator (4) for a disconnectable clutch in motor vehicles, having a self-adjusting release bearing (7), which is supported on a housing (3) and is in the form of a rolling-contact bearing which is designed as an inclined-shoulder bearing and has an outer bearing ring (8) arranged in a rotationally fixed position, and a rotating inner bearing ring (9), as well as rolling bodies (11) guided between the two rings, the inner bearing ring (9) being assigned an adjusting ring (16), and a sliding element (21) being fitted in a supporting region of the adjusting ring (16) on the inner bearing ring (9), in the form of complementary spherical-cap segments (19, 20) thereof, for arranging the release bearing (7) so as to be pivotable, **characterized in that** the sliding element (21) of plastic is moulded onto a radially oriented annular flange (17) of the adjusting ring (16), on which a spring element (18) connected to the disconnectable clutch is supported by means of an injection-moulding process in a single operation together with a noise-reducing and wear-reducing coating (22), and the sliding element and the coating are formed on the adjusting ring (16) as a single piece by material-to-material bonding.

2. Clutch operator according to Claim 1, **characterized in that** the coating (22) of the annular flange (17) of the adjusting ring (16) is formed by a plastic run-on disk which is formed integrally on the annular flange (17) using the injection-molding process.

3. Clutch operator according to Claim 2, **characterized in that** the noise-reducing and wear-reducing coating (22) is made from plastic and, at least in the region of the contact zone with the spring element (18), has a molded microstructure which can be plasticized under load from the spring element (18).

4. Clutch operator according to Claim 2 or 3, **characterized in that** the noise-reducing and wear-reducing coating (22) and the sliding ring (21) are made from plastic, the plastics preferably being thermoplastics based on a highly heat-resistant polyamide or other highly heat-resistant thermoplastics, such as polyaryl ether ketones (PAEKs).

5. Clutch operator according to Claim 4, **characterized in that** from the range of polyamides it is preferable to select polyamide 46 (PA 46) or semiaromatic polyamides, such as polyphthalamide (PPA) or polyhexamethylene terephthalamide (PA6T) or copolymers thereof with polyhexamethylene isophthalamide (PA6T/6I) and/or polyhexamethylene adipamide (PA6t/66, PA6T/6I/66) or polymethylpentamethylene terephthalamide (PA6T/MPMDT) with friction- and wear-reducing as well as strength-enhancing additives.

6. Clutch operator according to Claim 5, **characterized in that** the additives selected are carbon fibers and/or aramid fibers in an amount by weight of from 1 to 40%, preferably carbon fibers in an amount by weight of from 20 to 30%, aramid fibers in an amount by weight of from 1 to 15%, and solid lubricants, such as molybdenum disulfide, in an amount by weight of from 1 to 5%, together with or as an alternative graphite in an amount by weight of from 1 to 10%, together with or as an alternative a friction reducer, such as polytetrafluoroethylene (PTFE), in an amount by weight of from 1 to 30%, preferably a PTFE content of from 5 to 15% by weight, together with or as an alternative polyphenylene sulfone (PPS02, Ceramer®) in an amount by weight of from 1 to 30%, preferably 1 to 15% by weight.

7. Clutch operator according to Claim 1, **characterized in that** the sliding element (21) and the coating (22) of the annular flange (17) of the adjusting ring (16) and/or the coating (44) of other friction partners (spherical-cap segment 19, 20) are formed by a hard-material coating.

8. Clutch operator according to Claim 7, **characterized in that** the hard-material coating is formed by a DLC coating (DLC=diamond-like carbon).

9. Clutch operator according to Claim 7, **characterized in that** the hard-material coating is formed by a hydrogenated carbon material layer with tungsten fractions.

10. Clutch operator according to Claim 7, **characterized in that** the hard-material coating is formed by a titanium-niobium nitride layer or a titanium-niobium oxynitride layer.

11. Clutch operator according to Claim 7, **characterized in that** the hard-material coating is formed from a material which consists of a tetrahedral carbon without hydrogen.

12. Clutch operator according to Claim 7, **characterized in that** the hard-material coating includes chromium nitride layers in which nanodispersions of chromium carbide (CrC) are incorporated.

13. Clutch operator according to Claim 7, **characterized in that** the hard-material coating comprises a multiple layer consisting of W-C:H (hydrogenated carbon material layer with tungsten fractions) and at least one layer of a hydrogenated carbon of the a-C:H type.

14. Clutch operator according to Claim 7, **characterized in that** the hard-material coating is formed as a supernitride layer.

15. Clutch operator according to Claim 7, **characterized in that** the hard-material coating is applied to at least one contact surface and/or to at least one running surface of the clutch operator, in a thickness of less than or equal to 0.015 mm.

16. Clutch operator according to Claim 7, **characterized in that** the hard-material coating is applied by means of a plasma surface coating or by means of a laser beam, preferably operated in pulsed mode, to the contact zone of a component of the release bearing which is exposed to wear.

## Revendications

1. Mécanisme de butée d'embrayage (4) pour un embrayage de séparation de véhicules automobiles, avec une butée d'embrayage auto-réglable (7), s'appuyant sur un boîtier (3), sous forme d'un palier de roulement constitué par un palier à épaulement oblique, qui présente une bague de palier extérieure (8) disposée en position stationnaire et une bague de palier intérieure tournante (9) ainsi que des corps de roulement (11) guidés entre celles-ci, dans lequel une bague de réglage (16) est associée à la bague de palier intérieure (9), et un élément de glissement (21) est utilisé, pour un agencement pivotant de la butée de débrayage (7), dans une région d'appui de la bague de réglage (16) sur la bague de palier intérieure (9) sous la forme de segments de calotte sphérique complémentaires (19, 20) de celle-ci, **caractérisé en ce que** l'élément de glissement (21) est formé en matière plastique par un procédé de moulage par injection en une seule opération en même temps qu'un revêtement (22) réduisant le bruit et l'usure sur une bride annulaire (17) orientée radialement de la bague de réglage (16), sur lequel prend appui un élément de ressort (18) relié à l'embrayage de séparation, et l'élément de glissement et le revêtement sont formés en une seule pièce sur la bague de réglage (16) en liaison matérielle l'un avec l'autre.

2. Mécanisme de butée d'embrayage selon la revendication 1, **caractérisé en ce que** le revêtement (22) de la bride annulaire (17) de la bague de réglage (16) est formé par un disque d'entrée en matière plastique formé sur la bague de réglage (17) par le procédé de moulage par injection.

3. Mécanisme de butée d'embrayage selon la revendication 2, **caractérisé en ce que** le revêtement (22) réduisant le bruit et l'usure est en matière plastique et présente, au moins dans la région de la zone de contact avec l'élément de ressort (18), une microstructure moulée, qui peut être plastifiée sous la charge par l'élément de ressort (18).

4. Mécanisme de butée d'embrayage selon la revendication 2 ou 3, **caractérisé en ce que** le revêtement (22) réduisant le bruit et l'usure et la bague de glissement (21) sont en matière plastique, dans lequel les matières plastiques sont de préférence des matières plastiques thermoplastiques à base d'un polyamide résistant à la chaleur ou d'autres matières plastiques thermoplastiques résistant à la chaleur, comme le polyaryléthercétone (PAEK).

5. Mécanisme de butée d'embrayage selon la revendication 4, **caractérisé en ce que** l'on a choisi, dans le domaine des polyamides, de préférence le polyamide 46 (PA 46) ou des polyamides partiellement aromatiques, comme le polyphtalamide (PPA) ou le poly-hexaméthylène-téréphtalamide (PA6T), ou des copolymères de celui-ci avec le poly-hexaméthylène-isophtalamide (PA6T/6I) et/ou le poly-hexaméthylène-adipinamide (PA6t/66, PA6T/6I/66) ou le poly-méthyl-pentaméthylène-téréphtalamide (PA6T/MPMDT) avec des substances d'addition réduisant le frottement et l'usure et augmentant la résistance.

6. Mécanisme de butée d'embrayage selon la revendication 5, **caractérisé en ce que** l'on a choisi comme substances d'addition des fibres de carbone et/ou des fibres d'aramide avec une proportion en poids de 1 à 40 %, de préférence des fibres de carbone avec une proportion en poids de 20 à 30 %, des fibres d'aramide avec une proportion en poids de 1 à 15 %, ainsi que des lubrifiants solides, comme le bisulfure de molybdène, avec une proportion en poids de 1 à 5 %, simultanément ou en alternance avec du graphite en une proportion en poids de 1 à 10 %, simultanément ou en alternance avec un réducteur de frottement, comme le polytétrafluoroéthylène (PTFE), en une proportion en poids de 1 à 30 %, de préférence une proportion de PTFE de 5 à 15 % en poids, simultanément ou en alternance avec du polyphénylène sulfone (PPS02, Ceramer®) en une proportion en poids de 1 à 30 %, de préférence de 1 à 15 % en poids.

7. Mécanisme de butée d'embrayage selon la revendication 1, **caractérisé en ce que** l'élément de glissement (21) et le revêtement (22) de la bride annulaire (17) de la bague de réglage (16) et/ou le revêtement (44) d'autres partenaires de frottement (segment de calotte sphérique 19, 20) sont formés par un revêtement de matière dure.

8. Mécanisme de butée d'embrayage selon la revendication 7, **caractérisé en ce que** le revêtement de matière dure est formé par un revêtement DLC (DLC = carbone en forme de diamant amorphe).

9. Mécanisme de butée d'embrayage selon la revendication 7, **caractérisé en ce que** le revêtement de matière dure est formé par une couche de matériau hydrocarboné avec des parties de tungstène.

10. Mécanisme de butée d'embrayage selon la revendication 7, **caractérisé en ce que** le revêtement de matière dure est formé par une couche de nitrure de titane-niobium ou une couche d'oxynitrure de titane-niobium.

11. Mécanisme de butée d'embrayage selon la revendication 7, **caractérisé en ce que** le revêtement de matière dure est formé d'un matériau, qui se compose d'un carbone tétraédrique sans hydrogène.

12. Mécanisme de butée d'embrayage selon la revendication 7, **caractérisé en ce que** le revêtement de matière dure comprend des couches de nitrure de chrome, dans lesquelles de nanodispersions de carbure de chrome (CrC) sont incorporées.

13. Mécanisme de butée d'embrayage selon la revendication 7, **caractérisé en ce que** le revêtement de matière dure comprend une couche stratifiée composée de W-C:H (couche de matériau hydrocarboné avec des parties de tungstène) et au moins une couche d'un hydrocarbure du type a-C:H.

14. Mécanisme de butée d'embrayage selon la revendication 7, **caractérisé en ce que** le revêtement de matière dure est formé par une couche de supernitrure.

15. Mécanisme de butée d'embrayage selon la revendication 7, **caractérisé en ce que** le revêtement de matière dure est déposé sur au moins une face de contact et/ou sur au moins une face de glissement du mécanisme d'embrayage avec une épaisseur inférieure ou égale à 0,015 mm.

16. Mécanisme de butée d'embrayage selon la revendication 7, **caractérisé en ce que** le revêtement de matière dure est déposé au moyen d'un revêtement de surface au plasma ou au moyen d'un faisceau laser, de préférence à fonctionnement pulsé, sur la zone de contact exposée à l'usure d'un composant de la butée d'embrayage.
